# EUROPEAN PATENT SPECIFICATION

(11) **EP 3 013 692 B1**
(45) Date of publication and mention of the grant of the patent: **31.07.2019**
(21) Application number: 14732213.5
(22) Date of filing: 24.06.2014
(51) Int. Cl.: B65B 3/02, B29C 49/46, B29C 49/06, B65B 61/08

(54) **METHOD FOR FORMING CONTAINERS BY APPLYING A PRESSURE PROFILE CONTROLED BY A STRETCH ROD**
VERFAHREN ZUR HERSTELLUNG VON BEHÄLTERN DURCH ANWENDEN EINES DURCH EINEN RECKDORN GESTEUERTEN DRUCKPROFILS UND ENTSPRECHENDE MASCHINE
PROCÉDÉ POUR FORMER DES CONTENANTS PAR APPLICATION D'UN PROFIL DE PRESSION COMMANDÉ PAR UNE TIGE D'ÉTIRAGE ET STATION CORRESPONDANTE

(30) Priority: 24.06.2013 EP 13305862
(43) Date of publication of application: 04.05.2016
(73) Proprietor: Discma AG, 8050 Zürich (CH)
(72) Inventor: DESOUTTER, Luc, F-76930 Octeville sur Mer (FR)
(74) Representative: Lavoix
(86) International application number: PCT/EP2014/063269
(87) International publication number: WO 2014/206978

(56) References cited:
- WO-A1-99/52701
- WO-A1-2006/096916
- FR-A1- 2 978 371
- US-A1- 2004 009 257
- US-A1- 2011 135 778
- US-A1- 2011 175 260
- US-A1- 2013 122 136

## Description

### TECHNICAL FIELD

The present invention relates to a method for forming a container from a preform and filling said container with a liquid.

The invention further relates to a station for forming and filling a container, and to a machine for forming and filling a plurality of containers using such stations.

The invention relates to the field, known as hydro forming, of forming containers from a preform using an incompressible liquid to deform the preform.

In the application, "liquid" has a physical meaning. It designates any incompressible and able to flow medium. The liquid can have a low viscosity (like water or alcohol), a medium viscosity (like eatable oil or soup), or a high viscosity (like yoghurt or creamy product). The liquid can be homogeneous or not homogeneous (including fruit pulp or bits of foodstuff). It is not limited to foodstuff. The incompressible liquid may be for example water, or other beverages, body care products, home and garden care products, medical fluids, fuels, operating fluids, and the like.

### BACKGROUND

In the field of hydro forming, it is known to inject the incompressible liquid in a heated preform made of plastic material at a pressure which is adapted to urge the wall of the preform against the wall of the molding cavity such that the preform is deformed and acquires the shape of the molding cavity and of the container to be produced.

However, it is also known that this pressure level is not sufficient to completely shape the preform into the container, meaning that, with the pressure applied to the preform, the preform acquires a shape which is not exactly the shape of the molding cavity and that an extra deformation is needed to completely urge the wall of the preform against the wall of the molding cavity. It is in particular the case when embossed letters or logos must be reproduced on the external surface of the container wall, or when the wall has ridges. Shapes having locally a very small radius of curvature are very difficult to obtain.

To this end, after the injection of liquid at a first pressure, a second pressure greater than the first pressure, is applied to the preform during a short time in order to create a pressure peak inside the preform, the pressure peak being arranged to finalize the shaping of the preform into a the container.

Several solutions have been proposed to apply the second pressure to the preform. FR-2 978 371 has disclosed an injection device comprising compression means between the liquid source and the outlet of the injection device. The compression means are arranged to temporarily increase the pressure of the liquid injected through the outlet of the injection. Consequently, when the compression means are not used, the liquid is injected at a first pressure and when the compression means are actuated, the pressure of the liquid is increased to provide the pressure peak needed to finish the forming of the container. A drawback of such a liquid forming method is that it needs two sealing mechanisms with their actuators, one between the compression means and the liquid pump and the other between the feeding duct and the preform neck.

US-2011/0135778 also discloses applying the pressure peak by temporarily varying the pressure of the liquid injected in the container. In this injection device, a stretch rod arranged to assist in the axial expansion of the container comprises an air vent placing the inner volume of the preform in fluidic communication with the atmosphere. Such an injection device does not allow precisely controlling the pressure inside the preform during its deformation since there is a pressure loss in the air vent of the stretch rod.

US-2013/0122136 discloses a device for injecting air and liquid into the neck of a container in order to form said container. Liquid is supplied by a pipe. A sealing mechanism extends between the pipe and the neck. Once the sealing mechanism closes the gap between the pipe and the neck, the container is still in fluidic connection with the liquid source through the pipe and there is no movement of the pipe into the container.

According to another solution, WO-2012/037054 discloses a method wherein a liquid in injected at a first pressure in a preform placed in a molding cavity having a first volume. When the pressure peak is to be applied, the volume of the molding cavity is reduced by moving a part of the mold in order to increase the pressure applied to the preform. These solutions are satisfactory but require a modification of the injection device and/or of the mold and of the mold holder in order to carry out the step of increasing the pressure from the first pressure to the second pressure. The machine for producing containers is therefore made more complex and implementing these solutions on existing machines or providing a new machine is expensive and time consuming.

One of the aims of the invention is to overcome these drawbacks by proposing a method for producing containers wherein the second pressure can be applied and controlled in a simpler manner.

### SUMMARY OF THE INVENTION

To this end, the invention relates to a method for producing a container filled with a liquid from a preform having an inner volume, the method using an injection device comprising an outlet and connected to a source of the liquid, the method comprising the following steps:
- placing the outlet in tight fluidic communication with the preform,
- injecting the liquid from the source in the inner volume of the preform through the outlet,
- closing a sealing barrier between the inner volume and the liquid source, the closed sealing barrier forming a fluid tight closed volume, said closed volume including at least the inner volume, said closing of the sealing barrier taking place once the closed volume is full of liquid,
- placing a piston member in said closed volume,
- driving said piston member when the sealing barrier is closed such that the liquid pressure in the closed volume increases,
wherein during the actuation of the piston member, the piston member enters at least in part inside the inner volume of the preform.

The sealing barrier of the invention delimits a closed volume, full of incompressible liquid. Consequently, by actuating the piston member, the surface of the part of the piston member in the closed volume can apply a force on the liquid inside the closed volume. That force can increase the pressure of the liquid and tend to deform the preform. The fact that the piston member enters at least in part inside the inner volume of the preform allows having said sealing barrier very close to the opening of the preform. This provides the sealing barrier with an additional function. Indeed, the sealing barrier of the invention can delimit the volume of liquid to be filled in the formed container. When the outlet is withdrawn from the preform, the quantity of liquid located outside the inner volume is limited by the sealing barrier. Therefore, by placing the sealing barrier close to the opening of the preform, the spillage of the liquid while the injection device is withdrawn can be reduced or to avoided.

Contrary to the invention, the device and method described in US-2013/0122136 does not use a piston member to increase the pressure inside the container.

According to another feature of the method according to the invention, the injection device further comprises:
- an inlet in fluidic communication with said liquid source,
- a chamber extending between the inlet and the outlet,
- a hollow control rod comprising a sealing ring extending in the chamber, the piston member extending inside the hollow control rod,
- sealing means provided between the piston member and the sealing ring to prevent liquid from flowing between the piston member and the sealing ring,
said closing the sealing barrier being made by moving the hollow control rod from an injecting position wherein the outlet is in fluidic communication with the inlet via the chamber to a sealing position wherein the sealing ring closes the chamber such that the sealing barrier isolates the closed volume from the rest of the chamber.

Contrary to the device disclosed in US-2011/0135778, the sealing barrier of the invention prevents liquid from flowing between the piston member, formed for example by a stretch rod, and the sealing ring. This allows precisely controlling the pressure inside the preform during its deformation.

According to another feature of the method according to the invention, the piston member is a stretch rod moved inside the inner volume of the preform in order to cause a deformation of the preform. The stretch rod is indeed a rigid solid rod which can be used to increase the pressure of the liquid inside the closed volume.

This allows using the stretch rod, for example at the beginning of the forming cycle, for longitudinal expansion of the preform and using the same stretch rod as a piston member during another period of the forming cycle. This provides an even simpler forming station because the same actuator of the stretch rod can be used for both functions, longitudinal mechanical expansion first, and then liquid expansion. Consequently, there is no need of adding any element to the injection device or to the machine for forming the containers. The method can thus be used with any machine equipped with an injection device using a stretch rod to assist in the forming of the container.

Furthermore, the use of the stretch rod to control the pressure inside the molding cavity allows a fine tuning of said pressure and allows applying in a simple manner a particular pressure profile to the preform if needed.

According to another feature of the method according to the invention, the method comprises, during the injection of the liquid, the steps of:
- moving the stretch rod in translation along an axis A, defining an axial direction to a bottom of the preform,
- pushing the stretch rod to axially deform the preform, and
- retrieving at least a part of the stretch rod from the inner volume before the closing of the sealing barrier.

Retrieving the stretch rod puts the stretch in a position of being able to enter again in the inner volume for changing the liquid pressure and expanding the preform.

According to other features of the method according to the invention:
- the method further comprises placing the preform in a mold, said mold forming a mold cavity having the shape of the container to be produced, the preform placed in the mould being made of a thermoplastic material and being heated to a temperature greater than the glass transition temperature of the preform material prior to the liquid injection in the preform,
- the injection of the liquid is a primary deformation step, said liquid being injected at a first pressure arranged to cause a deformation of the preform towards the wall of the mold cavity and the closing of the sealing barrier takes place when said deformed preform has acquired an intermediary shape,
- the first pressure is applied to the liquid by injection means adapted for transferring the liquid from the liquid source to the inlet of the injection device, the sealing barrier extending between said injection means and the outlet of the injection device;
- the actuation of said piston member is made by increasing the volume of the piston member inside the closed volume, the other parts delimiting said closed volume being the preform itself and almost rigid parts fixed with respect to the preform,
- the actuation of the piston member applies a second pressure inside the inner volume, said pressure being arranged to further deform the preform from its intermediary shape to the shape of the molding cavity such that a filled and formed container is obtained.

The second pressure is applied by using the piston member, which can be the stretch rod, to increase the pressure inside the preform.

According to other features of the method according to the invention:
- the first pressure is applied until the intermediary shape presents a volume corresponding to between 95% and 98% of the volume of the container to be produced, the second pressure being applied such that the volume of the intermediary shape further increases by 2% to 5% in order to obtain the formed container,
- the method comprises a holding step during which the deformed preform shape is upheld at the shape of the mold cavity, a force applied to the piston member being controlled such that the pressure applied to the liquid in the closed volume follows a predetermined pressure profile.

According to another feature of the method according to the invention:
- the second pressure is applied both by moving the piston member inside the closed and filled volume of the deformed preform and by reducing the volume of the molding cavity.

According to this feature, the second pressure can be applied both by using the piston member and by reducing the volume of the molding cavity, which can increase the rate at which the second pressure can be applied and thereby increase the throughput of a machine implementing the method according to the invention.

According to other features of the method according to the invention:
- the mold comprises at least one main part and one bottom part, said parts defining together the molding cavity, the reducing of the volume of the molding cavity being obtained by moving the bottom part relative to the main part of the mold.
- the method comprises a step of shaping at least part of the container by further reducing the volume of the molding cavity, the pressure applied to the deformed preform during this step being maintained at a constant level by retrieving a part of the piston member form the inner volume to compensate for the increase in pressure due to the reduction of the volume of the molding cavity.

As mentioned previously, the piston member can be used to apply a particular pressure profile to the preform, for example for compensating the increase of pressure due to a particular shaping step or for applying a holding pressure sometimes needed at the end of hydro forming a container.

According to other features of the method according to the invention:
- the first pressure is substantially comprised between 4 and 15 bar,
- the second pressure is substantially comprised between 20 and 80 bar, preferably between 25 and 45 bars, in particular about 40 bars,
- the pressure of the predetermined pressure profile is comprised between 4 to 20 bars,
- the position of the piston member inside the formed container just before the outlet and the piston member are retrieved from the formed container is such that the volume of the liquid inside of the closed volume is equal to a volume of liquid at or below a desired level of liquid inside the produced container.

According to another aspect, the invention also relates to a station for forming and filling with liquid a container from a preform having an inner volume, the station comprising:
- an injection device including an outlet in fluidic communication with a liquid source,
- an injection device actuator arranged to connect the outlet in tight fluidic communication with the preform,
- injection means arranged to take liquid from the liquid source and to inject said liquid in the inner volume of the preform through the outlet,
- a closable sealing barrier extending between the inner volume and the liquid source, wherein closing the sealing barrier when the injection device actuator is actuated, forms a fluid tight closed volume comprising at least the inner volume,
- a piston member placed in the fluid tight closed volume,
- a control unit adapted to successively drive the injection means, close the sealing barrier when the volume to be formed is full of liquid and then drive the piston member so as to increase the liquid pressure in the closed volume,
wherein during the actuation of the piston member, the piston member is at least in part inside the inner volume of the preform.

According to other features of the station according to the invention:
- the injection device further comprises:
   - an inlet in fluidic communication with said liquid source,
   - a chamber extending between the inlet and the outlet,
   - a hollow control rod comprising a sealing ring extending in the chamber, the piston member extending inside the hollow control rod,
   - sealing means provided between the piston member and the sealing ring to prevent liquid from flowing between the piston member and the sealing ring,
      the sealing barrier comprising the sealing ring, the sealing means and the piston member such that the sealing barrier isolates the closed volume from the rest of the chamber.
- the station further comprises injection means adapted to inject liquid coming from the liquid source through the inlet to the chamber and to inject liquid through the outlet at a first pressure.

In other words, the invention relates to a station for forming and filling with liquid a container from a preform having an inner volume, the station comprising:
- an injection device including an outlet in fluidic communication with a liquid source,
- an injection device actuator arranged to connect the outlet in tight fluidic communication with the preform,
- injection means arranged to take liquid from the liquid source and to inject said liquid in the inner volume of the preform through the outlet,
- a closable rigid sealing barrier extending between the inner volume and the injection means in the vicinity of the outlet, said closable rigid sealing barrier comprising a port,
- a piston member movable in a fluid tight manner through the port, wherein said rigid sealing barrier and said piston member form when the injection device actuator is actuated a fluid tight closed volume comprising at least the inner volume,
- a control unit adapted to successively drive the injection means, close the sealing barrier when the volume to be formed is full of liquid and then drive the piston member through the sealing barrier into the closed volume so as to increase the liquid pressure in the closed volume,
wherein during the actuation of the piston member, the piston member is at least in part inside the inner volume of the preform.

According to other features of the station according to the invention:
- the piston member is formed by a stretch rod adapted to longitudinally stretch the preform or by an element distinct from the stretch rod, in which case, the station further comprises a stretch rod actuator different from the piston member actuator,
- the station comprises a mold having a mold cavity and a placing device adapted to place the preform in the mold cavity,
- the piston member is adapted to increase the pressure liquid up to a pressure level adapted to provide expansion of the preform up to the shape of the mold cavity,
- the piston member and the sealing barrier are arranged such that the piston member is able to move, inside the fluid tight closed volume and all over the range of the liquid pressure generated by the piston member, without breaking the sealing barrier.

In a variant, the seal between the piston member and the housing of the injection device may be attached to the injection device or to a moving part of the piston member. The piston member may slide along the seal while the volume of the piston member included into the closed volume increases. In another variant, the seal may be attached to the piston member and may slide along a surface of the injection device such as to reduce the volume of said closed volume. In both variant, the preform expands in order to keep a constant volume of the incompressible liquid inside said closed volume. Additionally, by making sure that the seal under pressure resists to the piston member, there is no leaks of liquid within said closed volume. It is possible to use said piston member to control the pressure inside the closed volume.

According to another aspect, the invention also relates to a machine for forming and filling with liquid a plurality of containers, comprising a plurality of stations as described above distributed along a closed loop carousel, the machine comprising at least one pump for providing a liquid at a predetermined pressure, said pump being in fluidic communication with each injection device of said stations.

Since the pressure can be simply controlled by the piston member, the usual piston used for injecting the liquid, which is expensive and cumbersome, can be replaced by a simple pump arranged to inject the liquid at the first pressure. The injection device can therefore be simplified and the space requirement to install the injection device and thus the station comprising the injection device and the machine comprising the stations can be reduced.

### BRIEF DESCRIPTION OF THE DRAWINGS

Other aspects and advantages of the invention will appear upon reading the following description, given by way of example and made in reference to the appended drawings, wherein:
- Figs 1 to 7 are diagrammatical cross-section views of an injection device and of a mold carrying a preform at various steps of the method according to a first embodiment of the invention,
- Figs. 8 to 10 are diagrammatical cross-section views of the injection device and of a particular mold at various steps of the method according to a second embodiment of the invention,
- Fig. 11 is a diagram showing the relation between the deformation of the preform and the pressure profile applied to the preform, and
- Fig. 12 is a diagrammatical cross-section view of an injection device according to a third embodiment of the invention, wherein the piston member is distinct from the stretch rod.

### DETAILED DESCRIPTION OF THE INVENTION

In the following description, the terms "upper" and "lower" are defined relative to axis A, which corresponds to the axis of the container to be produced and which extends substantially vertically when the container is placed on its bottom.

The invention relates to the technical field of forming containers **1,** such as bottles, for example sterile or asepticized bottles containing water or carbonated water based drinks.

More specifically, the invention relates to a method for producing a container **1** from a preform **2** using a station comprising an injection device **4** arranged to inject an incompressible liquid in the preform 2 placed in a mold **6,** the incompressible liquid being able to shape the preform 2 into the container 1 and to fill the container 1, as will be described later. Such a method is known as hydro forming and uses a hydro forming machine, which is known per se and which will not be described in detail herein, except for the parts that are needed to perform the method according to the invention.

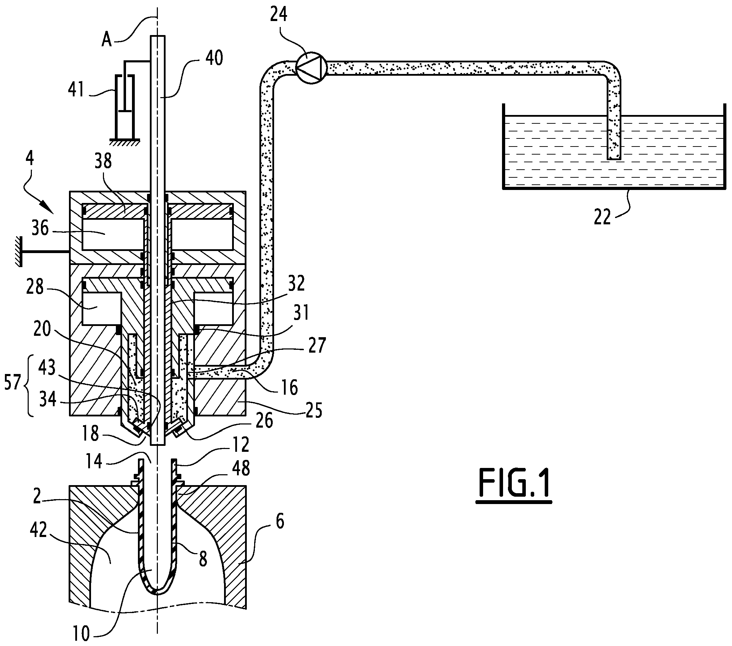

The preform 2 comprises a hollow body **8,** defining an inner volume **10,** and a neck **12** comprising an opening **14,** through which the inner volume 10 is accessible. A preform may have a shape similar to that of a test tube being closed at lower end and having the neck 12 with the opening 14 at the upper end. The neck 12 already has the final shape of the neck 12 of the container 1 to be produced. The preform 2, shown, by way of nonlimiting example in Fig. 1, has a cylindrical body 8 extending along an axis A which coincides with the axis of the neck 12. The preform may be made from any suitable plastic materials, such as polyesters, such as polyethylene terephthalate (PET), polyethylene naphthalate (PEN), polyethylene imine (PEI), polytrimethylene terephthalate (PTT), polylactic acid (PLA), polyethylene furanoate (PEF), or polyolefins, such as polyethylene low density (LDPE) or high density (HDPE), polypropylene (PP), or styrene based materials such as polystyrene (PS), acrylonitrile butadiene styrene (ABS) or other polymers, such as polyvinyl chloride (PVC). The preforms 2 are generally produced according to an injection moulding process and moulded at a site different from the site where the machine for forming containers 1 is located.

Alternatively, the preform could include some metal, in particular the preform could be made of a metallic alloy, such as a steel or aluminium alloy. For example, the preform could be the major part of a can on which a lid is crimped. The liquid forming process according to the invention could be used to provide shape details on the can wall together with filling the can before crimping the lid.

The incompressible liquid injected in the preform by the injection device 4 is for example the liquid which is intended to fill the container 1, when the container 1 is used by an end user.

In reference to Fig. 1, the injection device 4 for injecting the incompressible liquid in the preform 2 will be described. The injection device 4 described herein and shown in the figures is an example of an injection device that can be used for hydro forming methods and it is to be understood that the method according to the invention can be used with any other kind of injection devices.

The injection device 4 comprises an inlet **16,** an outlet **18** and a chamber **20** extending between the inlet 16 and the outlet 18 and placing the inlet 16 in fluidic communication with the outlet 18.

The inlet 16 is placed in fluidic communication with an incompressible liquid source **22,** for example a water reservoir, via injection means **24** adapted for transferring the liquid from the liquid source 22 to the inlet 16, and appropriate tubing extending between the inlet 16, the injection means 24 and the liquid source.

According to a preferred embodiment, the injection means 24 are formed by a pump, as will be described later. However, the injection means could also be formed by a conventional piston or by other appropriate means.

The outlet 18 is adapted to be placed in liquid tight fluidic communication with the opening 14 formed by the neck 12 of the preform 2, and therefore with the inner volume 10 of the preform 2. By liquid tight fluidic communication, it is meant that when the outlet 18 is in fluidic communication with the inner volume of the preform 2, the liquid flows only in the inner volume 10 of the preform 2 and not outside the preform 2.

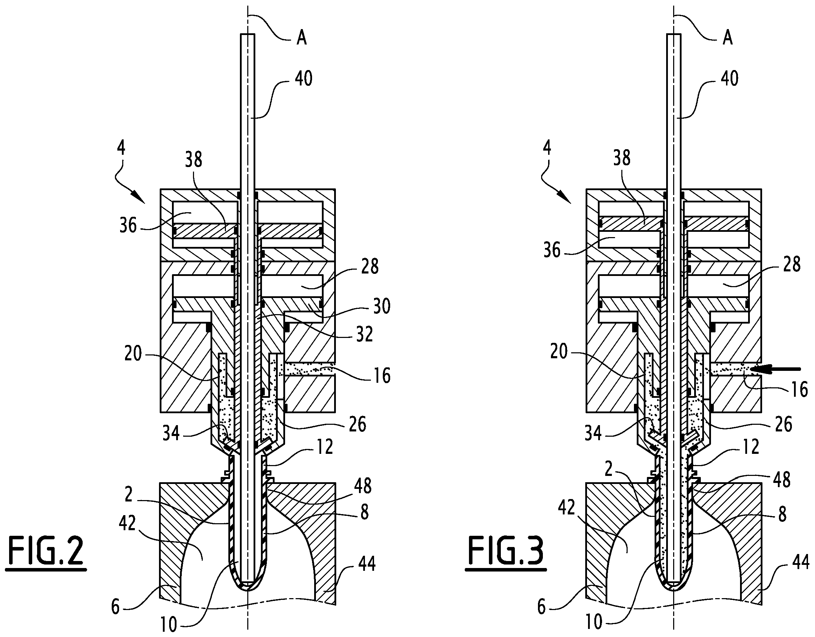

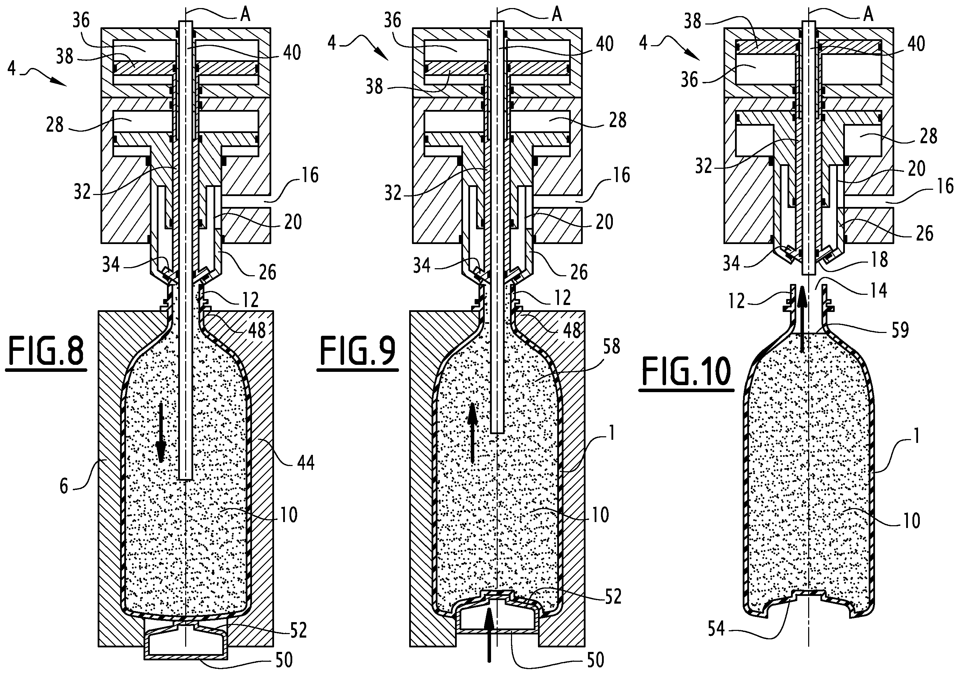

The outlet 18 is for example formed by an opening of an injection nozzle **26.** The outlet 18 is in fluidic communication with the chamber 20. The injection nozzle 26 is movable inside a housing **25** of the injection device 4, in translation along axis A between a retracted position (Figs. 1 and 10) and an active position (Figs. 2 to 9 and 12). In the retracted position, the injection nozzle 26 leaves room under the injection device 1 to position a preform 2 under the injection nozzle 26, as shown in Fig. 1. In the active position, the injection nozzle 26 is placed against the neck 12 of the preform 2 with a liquid tight contact between the injection nozzle 26 and the neck 12 of the preform 2, such that the outlet 18 of the injection nozzle 26 is in fluidic communication with the inner volume 10 of the preform 2. The chamber 20 of the injection nozzle 26 for example comprises a hollow space including a regular cylindrical portion and a truncated cone or a pyramidal portion extending between the regular cylindrical portion and the outlet 18 of the injection nozzle. The diameter of the chamber 20 reduces progressively from the diameter of the regular cylindrical portion to the diameter of the opening in the conical portion.

The chamber 20 is in fluidic communication with the inlet 16 via a lateral opening **27** of the injection nozzle 26, and via a transversal duct of the housing 25.

The housing 25 further comprises a first upper compartment **28** arranged to receive actuation means **30** for moving the injection nozzle 26. The actuation means are for example pneumatic actuation means and for example comprise a piston, attached to the injection nozzle 26 and hermetically separating the first upper compartment 28 into an upper part and into a lower part, each able to be filled with air. For moving the injection nozzle 28 between its retracted position and its active position, air is injected in the upper part of the first upper compartment 28 in order to increase the pressure in said upper part and to move the piston 30 such that the volume of the upper part increases, while to volume of the lower part decreases. Conversely, for moving the injection nozzle 28 between its active position and its retracted position, air is injected in the lower part of the first upper compartment 28 in order to increase the pressure in said lower part and to move the piston 30 such that the volume of the lower part increases, while to volume of the upper part decreases. The inner volume of the chamber 20 is hermetically isolated from the first upper compartment 28 by appropriate sealing means **31.**

The injection device 4 further comprises a hollow control rod **32** extending in the chamber 20 along axis A. The hollow control rod 32 comprises at its lower end, extending in the chamber 20, a sealing ring **34.** The sealing ring 34 has a shape which is complementary to the shape of part of the conical portion of the injection nozzle 26, such that, when the sealing ring 34 is applied against the wall of the conical portion, the sealing ring 34 closes hermetically the chamber 20 and prevents liquid from flowing through the outlet 18. The hollow control rod 32 is movable in translation along axis A in the chamber 20 between an injecting position, shown in Figs 3 to 5, wherein the sealing ring 34 is spaced from the wall of the pyramidal portion of the injection nozzle and wherein the outlet 18 is in fluidic communication with the inlet 16 via the chamber 20, and a sealing position, shown in Figs 1, 2 and 6 to 10, wherein the sealing ring 34 is applied against the wall of the conical portion of the injection nozzle 26 and hermetically closes the chamber 20.

The housing 25 further comprises a second upper compartment **36** arranged to receive actuation means for moving the control rod 32. The actuation means are for example pneumatic actuation means and for example comprise a piston **38,** attached to the control rod 32 and hermetically separating the second upper compartment 36 into an upper part and into a lower part, each able to be filled with air. For moving the control rod 32 between its injecting position and its sealing position, air is injected in the upper part of the second upper compartment 36 in order to increase the pressure in said upper part and to move the piston 38 such that the volume of the upper part increases, while to volume of the lower part decreases. Conversely, for moving the control rod 32 between its sealing position and its injecting position, air is injected in the lower part of the second upper compartment 36 in order to increase the pressure in said lower part and to move the piston 38 such that the volume of the lower part increases, while to volume of the upper part decreases. The first upper compartment 28 is hermetically isolated from the second upper compartment 36 by appropriate sealing means.

A stretch rod **40** extends inside the hollow control rod 32, passes through the outlet 18 and extends in the preform 2 to assist in the deformation of the preform 2 into a container, as known per se. The stretch rod 40 is formed by a rigid solid rod, meaning that no fluid is able to flow through the stretch rod 40. The stretch rod 40 is movable in translation along axis A in the hollow control rod 32 and is actuated by appropriate actuation means **41,** for example a servo motor or a magnetic actuation means. The functioning of the stretch rod 40 will be described with the description of the method according to the invention. Sealing means **43** are provided between the stretch rod 40 and the seal pin 34 in order to prevent liquid from flowing between the stretch rod and the seal ring 34.

In the vicinity of the seal ring 34, the hollow control rod 32 therefore defines a port extending around the stretch rod 40 and through which the stretch rod 40 is movable in a fluid tight manner thanks to the sealing means 43.

The mold 6 for receiving the preform 2 comprises a molding cavity **42** having the shape of the container 1 to be produced. The mold comprises for example at least two parts movable relative to each other, between an opened position and a closed position. The two parts are for example hinged together and are movable in rotation relative to each other around an axis substantially parallel to the axis A of the preform 2. Each part of the mold 6 comprises a body comprising a hollow recess having the shape of a half bottle to be formed. According to a non limiting example, the hollow recess of one part comprises a semi-cylindrical portion, closed at its lower end by a bottom surface having a the shape of a semi-circle, and terminated at its upper end by a tapered, then semi-cylindrical collar of a shape substantially complementary to the shape of half of the body 8 of the preform 2. The hollow recess of the other part of the mould is symmetrical to the hollow recess described above. In the opened position, the parts of the mould are separated from each other such that the preform 2 can be introduced between the two parts. In the closed position, the two parts are applied against each other to form a main part, such that the hollow recesses face each other and define together the molding cavity 42 having the shape of the container 1 to be formed. The molding cavity therefore comprises a cylindrical portion **44,** extending according to axis A, defined by the semi-cylindrical portions of the recesses and intended to form the body of the container 1, closed at its lower end by a circular bottom surface **46,** formed by the bottom surfaces of the recesses and intended to form the bottom of the container, and terminated at its upper end by a collar **48,** substantially complementary to part of the body of the preform 2. When the mould is closed, the preform 2 is held in the moulding cavity by the collar 48 of the moulding cavity. The collar holds the preform 2 just below the neck 12 of the preform, which extends above the collar 48 of the moulding cavity outside of said cavity. The molding cavity is hermetically closed with the preform 2 extending inside the moulding cavity.

According to the embodiment shown in Figs 8 and 9, the mold 6 further comprises a bottom part **50,** movable in translation relative to the main part along axis A between an inactive position (Fig. 8) and an active position (Fig. 9). In the inactive position, the bottom part 50 extends below the main part and defines, with the main part, a molding cavity having a first volume. In the active position, the bottom part 50 extends in the main part and defines, with the main part, a molding cavity having a second volume, which is inferior to the first volume. The bottom part 50 may have a particular shaping surface **52,** intended to confer to the bottom of the container to be formed a particular shaped bottom **54,** as shown in Fig. 10, and known as a "stoke base".

The method for producing a container 1 from a preform 2, using an injection device 4 and a mold 6 as described above will now be described, first according to a first embodiment in reference to Figs 1 to 7 and 11 and then according to a second embodiment in reference to Figs 8 to 10.

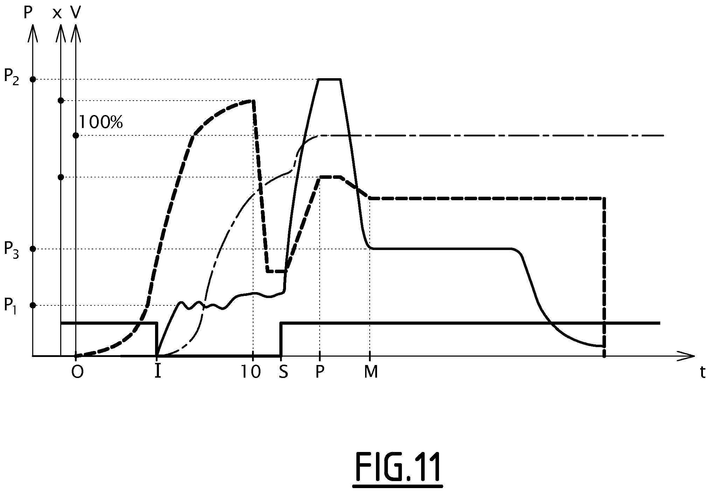

Fig. 11 is a diagram wherein the continuous line represents the pressure of the liquid ("P" vertical axis) over time (horizontal axis). The bold dotted line represents the movement of the stretch rod over time ("x" vertical axis). The mixed line represents the volume ("V" vertical axis) of the deformed preform over time. The bold continuous line represents the movement ("x" vertical axis) of the seal pin 34 over time.

In a first step, the preform 2 is pre-heated, for example in an oven (not shown), up to a temperature compatible with the subsequent deformation of the preform into a container. The preform is for heated to a temperature greater than the glass transition temperature of the preform material. Such an oven and heating step are conventional in methods and machines for producing containers and will not be described in greater detail here.

The preform 2 is then loaded into the mold 6 and placed under the injection device 4, as shown in Fig. 1. The injection nozzle 26 is, at this stage, in its retracted position while the control rod 32 is in its sealing position, as shown by the first segment of the bold continuous line of Fig. 11. The stretch rod 40 is also in a retracted position, wherein it barely protrudes from the outlet 18 or wherein it is completely retracted in the control rod 32, in order to leave a space under the injection device 1 to place the preform 2 loaded into the mold 6, as shown in Fig. 1. The inner volume of the chamber 20 is already filled with the incompressible liquid coming from the liquid source 22 and injected through the inlet 16 by the injection means 24. The injection means 24 are set to inject the liquid at a first pressure P₁, which is for example comprised between 4 and 15 bars depending on the size and volume of the container to be produced.

Next, as shown in Fig. 2, the injection nozzle 26 is moved into its active position wherein the outlet 18 is placed in abutment against the neck 12. The stretch rod 40 is moved in translation along axis A until it reaches the bottom of the preform 2, as shown in Fig. 2. At this stage, the control rod 32 is still in its sealing position. This step, wherein the stretch rod 40 is placed against the bottom of the preform and wherein the deformation of the preform has not begun is known as "point 0" of the hydro forming method, designated by reference 0 in the time axis of Fig. 11.

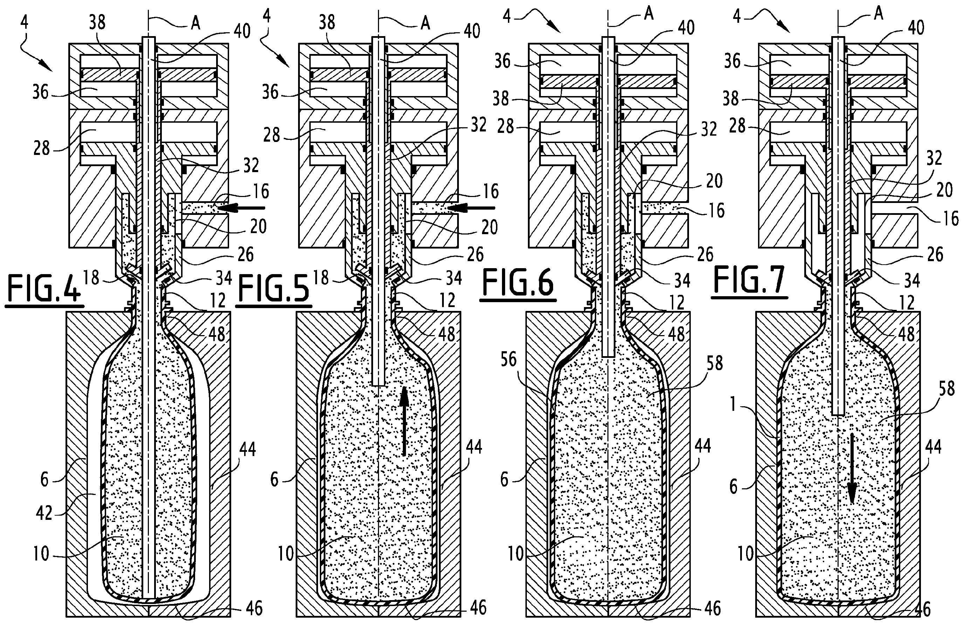

As shown in Fig. 3, the control rod 32 is then moved into its injecting position, as shown by reference I and by the second segment of the bold continuous line in Fig. 11, thereby placing the inlet 16 in fluidic communication with the outlet 18, and hence with the inner volume 10 of the preform. The preform 2 is then filled with the liquid which is injected through the outlet 18 at the first pressure P₁. The injection of the liquid in the preform 2 causes the preform 2 to deform, the wall of the body 8 being expanded towards the wall of the molding cavity 42 and the volume of the deformed preform increasing progressively as shown by the mixed line of Fig. 11. This deformation is assisted by the stretch rod 40 which continues to be moved in translation along axis A towards the bottom of the mold 6 so as to cause an axial deformation of the preform 2, as shown in Figs 3 and 4. It should be noted that during the movement of the control rod 32, small variations in the pressure can occur as the preform volume increases to become a partially formed container, as shown by the continuous line shown in Fig. 11 after reference I.

When the stretch rod 40 reaches the bottom of the mold 6 (Fig. 4), the movement of the stretch rod is stopped and a reverse movement is begun in order to retrieve a part of the stretch rod 40 from the deformed preform 2 (Fig. 5). The step wherein the stretch rod 40 reaches the bottom of the mold 6 and is stopped is known as "point 10" of the hydro forming method. At point 10, designated by reference 10 in the time axis of Fig. 11, the preform 2 has for example been deformed at more than 50% of the final shape of the container, meaning that the volume of the deformed preform 2 has reach more than 50% of the volume of the container 1 to be produced.

When the liquid has filled the deformed preform 2 up to a predetermined limit and when a part of the stretch rod has been retrieved from the bottom of the deformed preform 2, the preform has acquired an intermediary shape **56,** which is not quite the shape of the container to be produced, as shown in Fig. 6. The control rod 32 is moved in its sealing position to stop the injection of liquid inside the deformed preform 2, as shown in Fig. 6 and as designated by reference S and shown by the third segment of the bold continuous line in Fig. 11. The intermediary shape 56 presents a volume, which is substantially comprises between 95% and 99% of the volume of the container 1 to be produced, meaning that the deformed preform has to be further deformed such that the volume increases by 1% to 5% for the container to be obtained.

Until the control rod 32 is moved in its sealing position, the liquid continuously fills in a volume 10 of the deformed perform, and fills the chamber 20, up to the injection means 24. When the control rod 32 is in its sealing position, a sealing barrier **57** isolates a closed volume **58** of liquid from the rest of the chamber 20. The sealing barrier 57 consists in the sealing between the seal ring 34 and the conical portion of the chamber 20 and by the sealing means 43 between the seal ring 34 and the stretch rod 40 and by a section of the stretch rod itself which closes the port defined by the hollow control rod 32. The closed volume 58 is delimited by almost rigid spare parts of the injection device such that when the volume of the stretch rod being inside the closed volume 58 increases, the liquid pressure and the force applied to the preform wall also increase. As the mechanical resistance of the preform material is far less than that of said spare parts, the preform wall is deformed. The sealing barrier 57 extends between the outlet 18 and the injection means 24 arranged to pressurize the liquid at the first pressure P₁.

In other words, the sealing barrier 57 is formed by the sealing between the seal ring 34 and the conical portion of the chamber 20 and by the sealing means 43 between the seal ring 34 and the stretch rod 40 and comprises a port through which the stretch rod 40 is movable in a fluid tight manner. The closed volume 58 is closed by the sealing barrier 57 and by the stretch rod 40 extending through the port.

The stretch rod 40 passes through the sealing barrier 57, i.e. through the port defined by the hollow control rod 32 in the vicinity of the seal ring 34. It moves hermetically across the sealing barrier 57, meaning that the stretch rod 40 is able to move in the closed volume 58 without breaking the sealing barrier 57. This can be achieved by providing appropriate sealing means 43 between the seal pin 34 and the stretch rod 40. In particular, the sealing means 43 are adapted to allow a downward as well as an upward movement of the stretch rod 40 is the closed volume without allowing the liquid from to closed volume to leave said closed volume. A part of the stretch rod 40 is inside the closed volume and occupies a small portion of that closed volume. The remaining portion of the closed volume is totally filled with liquid. The sealing barrier is located inside the injection nozzle 26 and extends over the opening 14 of the neck 12, over the inner volume 10 of the deformed perform.

At this stage (shown in Fig. 7), the stretch rod 40 is moved back into the inner volume of the deformed preform 2. The volume of the stretch rod 40 in the closed volume therefore increases and pushes the liquid. The pressure inside the closed volume increases. The increase in pressure is very rapid until a second pressure P₂ is applied inside the preform, as shown by references P and P₂ in Fig. 11. The effect of the range of pressures between first pressure P₁ and second pressure P₂ and of the second pressure P₂ is to further deform the deformed preform 2 from its intermediary shape to the shape of the container to be produced, when the wall of the deformed preform is completely applied against the wall of the molding cavity 42, as shown in Fig. 7. The second pressure P₂ is for example comprised between 20 and 80 bar. When the preform material is PET, the second pressure P₂ can be comprised between 20 and 50 bar, in particular between 35 and 40 bars. When the preform material is metallic, the second pressure P₂ could be higher than 40 bars.

The volume of the stretch rod 40 which is inserted inside the deformed preform 2 while the closed volume is closed corresponds to the difference of the volume between the final formed container 1 and the intermediary shape 56. The value of the second pressure P₂ is advantageously controlled by controlling the force applied to the stretch rod 40 towards the bottom of the mold 6 while the closed volume remains tightly closed. When the container is almost totally urged against the mold cavity 42, the volume of the stretch rod inside said inner volume may have very little variation while the value of the second pressure P₂ can increase significantly. When the container cannot expand any more, the stretch rod cannot move.

Controlling the force applied on the stretch rod makes it simple to control the applied pressure. The station may comprise a control unit (not shown) including a memory which stores time profile data corresponding to the force to be applied by the piston member. Alternatively, the control unit may include determination means of such as time profile of the force to be applied. The station may further comprise a sensor sensing a technical parameter correlated to the force really applied by the piston member. The sensor may be a liquid pressure sensor or a current sensor of feeding electrical current of a driver of the piston member. The control unit may include one or several regulation loops connected to one or several of these sensors.

The control unit is adapted to successively drive the injection means 24, close the sealing barrier 57 when the volume 58 to be formed is full of liquid and then to drive the piston member 40 so as to increase the liquid pressure in the closed volume 58. The control unit could be adapted to drive successively the above three items by being connected to appropriate sensors, or determination means, providing the control unit with the information that the status expected from one of these items (injection means, sealing barrier, or piston member) is now completed (the volume to be formed is now full of liquid or the sealing barrier is now closed), and that the control unit is now allowed to drive the next item. The control unit could be so adapted by including an appropriate software or the like.

Then, a maintaining step can advantageously take place (point M of the time axis of Fig.11). As the material of the perform has reached very quickly the final shape of the container 1 (in less than 0.2 s for example), the temperature of that material may still be too hot, it could still be rather viscous and not stabilized in shape. A pressure needs to be continuously applied while the preform material cools down to an almost crystallized state. The "maintaining step" could also be called a "holding step" or a "container shape keeping step". The pressure applied to keep the shape of the container could be called the holding pressure, or third pressure P₃. The holding step is often necessary, even if the mold, against which the material is urged, is at ambient temperature, and if the liquid filling the formed container is cold, for example around 10°C. The holding step is even more necessary when the forming medium is hot, for aseptic reason for example.

The holding pressure applied during the maintaining step could be lower than the peak pressure P₂, because the volume expansion shows some hysteresis phenomenon when the pressure decreases. The friction of the thermoplastic material against the mold cavity keeps the container in place, even with a lower maintaining pressure.

Once the preform has acquired its final shape of the container 1 to be produced, and once the container material temperature is reduced such that a crystallisation has occurred, the force applied to the stretch rod 40 may stop. The liquid pressure drops down to the atmospheric pressure. The container is now ready to be opened. The stretch rod 40 is retrieved from the inner volume and the injection nozzle 26 is moved back into its retracted position. The mold 6 is moved from under the injection device and the filled container can be removed from the mold 6. The length of the stretch rod remaining into the inner volume while the relative pressure of the liquid is substantially null, corresponds to the volume of liquid extending between the sealing barrier 57 and the desired free level 59 of the liquid into the opened filled container 1 (Fig. 10).

Another advantage of the invention is that the strength necessary to close the seal pin 34 is minimized, because the seal pin 34 is closed only when the first pressure P₁ is applied, before the increase of the pressure up to the second pressure P₂. Therefore, the response time of the seal pin closing sequence is significantly improved. As soon as the seal pin 34 is closed, the pressure increase sequence can start while, in parallel of the pressure increase, actuation of a locking mechanism can hold the seal pin 34 in the closed position.

According to the second embodiment of the invention, the second pressure P₂ can be applied both by inserting the stretch rod 40 inside the deformed preform and by reducing the volume of the molding cavity 42, for example by moving a bottom part of the mold as disclosed in WO-2012/037054. This allows reducing the amplitude of the movement of both the stretch rod and the bottom part of the mold to apply the second pressure, compared to a method wherein the second pressure is applied only by the stretch rod or only by the volume reduction of the mold. For example, the volume of the molding cavity can be reduced by 0,1% to 5% to increase the pressure applied to the deformed preform, the rest of the pressure needed to reach the second pressure P₂ being obtained by moving the stretch rod inside the deformed preform.

As shown in Figs 8 to 10, the stretch rod 40 can also be used to control the pressure inside the container while a particular bottom 54, or stoke base, is formed. For forming the particular bottom, a bottom part 52 of the mold 6 is moved inside the molding cavity 42 to impart the shape of the bottom part 52 on the bottom of the container, as shown in Fig. 9. This movement causes the volume of the molding cavity 42 to be reduced and hence the pressure applied to the container to increase. This increase in pressure is therefore compensated by a corresponding retracting of the stretch rod 40, as shown in Fig. 9. Consequently, a container having a stoke base can be easily obtained as shown in Fig. 10.

The movement of the bottom part 52 for forming the stoke base can advantageously be actuated by a servo motor. This allows controlling the force applied by the bottom part, or controlling the movement amplitude, or controlling a combination thereof. As for the control of the stretch rod movement, the preferred parameter used to control the movement may change along sequences of the method.

It is to be understood that this particular feature could be used to impart a particular shape on any part of the body of the container, for example for forming a grip around the body. Any increase in pressure implied by imparting the particular shape can be compensated by a corresponding movement of the stretch rod 40.

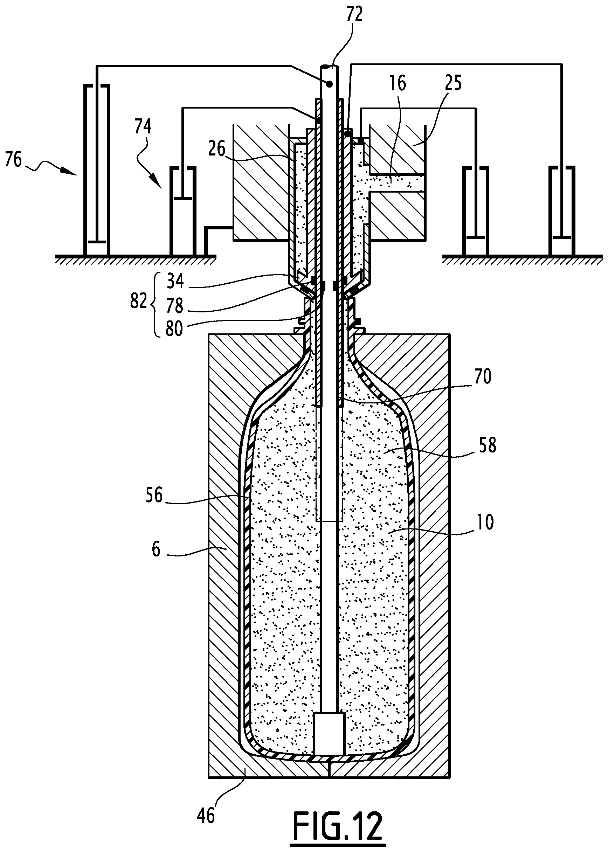

In the embodiments described above, the stretch rod 40 is used as a piston member introduced in the closed volume to increase the pressure in said volume. However, according to a third embodiment, shown in Fig. 12, the piston member and the stretch part can be distinct parts, as will now be described.

As illustrated in Fig.12, the third embodiment differs from the first embodiment by the fact that it comprises a piston member **70** and a stretch rod **72** which are distinct from each other, and respectively actuated by a piston actuator **74** and by a stretching actuator **76.** As illustrated, the piston member 70 may be a tube, coaxial to the stretch rod 72, while the stretch rod 72 remains a rigid solid rod, meaning that no fluid is able to flow through the stretch rod 72. The third embodiment comprises a sealing element **78** which seals the space between the piston member 70 and the seal ring 34. The port defined by the hollow control rod 32 therefore extends around the piston member 70. It also comprises a sealing element **80** providing sealing between the piston member 70 and the stretch rod 72. Therefore, when the seal ring 34 presses the injection nozzle 26, this closes a sealing barrier **82.** The sealing barrier 82 consists in the seal ring 34, the sealing element 78, a portion of the piston member 70, the sealing element 80 and a portion of the stretch rod 72. Therefore, both the piston member 70 and the stretch rod 72 hermetically pass through the sealing barrier 82 towards the inner volume 10 by passing through the port defined by the hollow control rod.

In other words, the sealing barrier 82 consists in the seal ring 34 and the sealing element 78 and comprises a port through which the piston member 70 and the stretch rod 72 are movable in a fluid tight manner. The closed volume 58 is closed by the sealing barrier 82 and by the piston member 70, the sealing element 80 and the stretch rod 72.

In a variant, the piston member 70 could have any shape compatible with the opening of the container to be formed and filled, said shape being adapted to preserve the sealing barrier 82 when the closed volume is formed by the sealing barrier 82.

In another variant, the forming and filling station may have longitudinal stretching means which does not include any internal stretch rod. Therefore, the piston member 70 may be actuated to only increase or control the pressure of the liquid in a prefilled and deformed perform (or in the almost completed container). During this step, the piston member 70 enters into the deformed perform but does not touch the bottom of the preform until the perform bottom touches the mold base 46.

It is to be understood that the third embodiment could also be combined with the second embodiment, by using a piston member 70 is conjunction with a movable bottom part 52.

An advantage of the third embodiment and of its variants is that the piston member 70 could be positioned in a retracted position while the stretch rod 72 or any corresponding stretching means continues to longitudinally stretch the perform. This allows a better synchronization of the increases in pressure versus the end of axial stretching. In some application, the increase in pressure could even start before the end of the axial stretching. In other applications, the method could include a shape developing step occurring after the end of the axial stretching and before the final increase in pressure due to the action of the piston member 70. During that shape developing step, the filled volume increases due to natural expansion of the perform material urged by the first pressure P₁.

The station described above is for example used in a machine for forming and filling with liquid a plurality of containers. Such a machine comprises a plurality of stations distributed along a closed loop carousel. The stations can be fed with the liquid from a single liquid source connected to a single pump. The pump is connected to the injection devices of each station. Such a machine requires less space to be installed.

## Claims

1. Method for producing a container (1) filled with a liquid from a preform (2) having an inner volume (10), the method using an injection device (4) comprising an outlet (18) and connected to a source (22) of the liquid, the method comprising the following steps:
- placing the outlet (18) in tight fluidic communication with the preform (2),
- injecting the liquid from the source (22) in the inner volume (10) of the preform (2) through the outlet (18),
**characterized in that**:
- closing a sealing barrier (57, 82) between the inner volume (10) and the liquid source (22), the closed sealing barrier forming a fluid tight closed volume (58), said closed volume including at least the inner volume (10), said closing of the sealing barrier taking place once the closed volume (58) is full of liquid,
- placing a piston member (40, 70) in said closed volume,
- driving said piston member (40, 70) when the sealing barrier is closed such that the liquid pressure in the closed volume (58) increases,
wherein during the actuation of the piston member (40, 70), the piston member (40, 70) enters at least in part inside the inner volume (10) of the preform (2).

2. Method according to claim 1, wherein the injection device (4) further comprises:
- an inlet (16) in fluidic communication with said liquid source (22),
- a chamber (20) extending between the inlet (16) and the outlet (18),
- a hollow control rod (32) comprising a sealing ring (34) extending in the chamber (20), the piston member (40, 70) extending inside the hollow control rod (32),
- sealing means (43) provided between the piston member (40, 70) and the sealing ring (34) to prevent liquid from flowing between the piston member and the sealing ring (34),
and wherein said closing the sealing barrier (57, 82) is made by moving the hollow control rod (32) from an injecting position, wherein the outlet (18) is in fluidic communication with the inlet (16) via the chamber (20), to a sealing position, wherein the sealing ring (34) closes the chamber (20) such that the sealing barrier (57, 82) isolates the closed volume (58) from the rest of the chamber (20).

3. Method according to claim 1 or 2, wherein the piston member is a stretch rod (40) moved inside the inner volume (10) of the preform (2) in order to cause a deformation of the preform (2).

4. Method according to claim 3, wherein during the injection of the liquid, the method comprises the steps of:
- moving the stretch rod (40) in translation along an axis A, defining an axial direction to a bottom of the preform,
- pushing the stretch rod to axially deform the preform, and
- retrieving at least a part of the stretch rod (40) from the inner volume (10) before the closing of the sealing barrier (57, 82).

5. Method according to any one of claims 1 to 4, wherein the method further comprises placing the preform (2) in a mold (6), said mold (6) forming a mold cavity (42) having the shape of the container (1) to be produced, the preform placed in the mould being made of a thermoplastic material and being heated to a temperature greater than the glass transition temperature of the preform material prior to the liquid injection in the preform,
and/or wherein the injection of the liquid is a primary deformation step, said liquid being injected at a first pressure (P₁) arranged to cause a deformation of the preform (2) towards the wall of the mold cavity (42) and the closing of the sealing barrier takes place when said deformed preform (2) has acquired an intermediary shape (56),

6. Method according to claim 5, wherein the first pressure (P₁) is applied to the liquid by injection means (24) adapted for transferring the liquid from the liquid source (22) to the the injection device (4), the sealing barrier (57, 82) extending between said injection means (24) and the outlet (18) of the injection device (4).

7. Method according to claim 5 or 6, wherein the actuation of said piston member (40, 70) is made by increasing the volume of the piston member inside the closed volume (58), the other parts delimiting said closed volume (58) being the preform itself and almost rigid parts fixed with respect to the preform.

8. Method according to any one of claims 5 to 7, wherein the actuation of the piston member (40, 70) applies a second pressure (P₂) inside the inner volume (10), said pressure being arranged to further deform the preform (2) from its intermediary shape (56) to the shape of the molding cavity (42) such that a filled and formed container is obtained.

9. Method according to any one of claims 5 to 8, wherein the first pressure (P₁) is applied until the intermediary shape (56) presents a volume corresponding to between 95% and 98% of the volume of the container (1) to be produced, the second pressure (P₂) being applied such that the volume of the intermediary shape (56) further increases by 2% to 5% in order to obtain the formed container (1).

10. Method according to any one of claims 5 to 9, comprising a holding step during which the deformed preform shape is upheld at the shape of the mold cavity (42), a force applied to the piston member (40, 70) being controlled such that the pressure applied to the liquid in the closed volume follows a predetermined pressure profile (P3).

11. Method according to any one of claim 5 to 10, wherein the second pressure (P₂) is applied both by moving the piston member (40, 70) inside the closed and filled volume (10) of the deformed preform (2) and by reducing the volume of the molding cavity (42).

12. Method according to claim 11, wherein the mold (6) comprises at least one main part and one bottom part (52), said parts defining together the molding cavity (42), the reducing of the volume of the molding cavity (42) being obtained by moving the bottom part (52) relative to the main part of the mold (6),
and/or wherein the method comprises a step of shaping at least part of the container by further reducing the volume of the molding cavity (42), the pressure applied to the deformed preform (2) during this step being maintained at a constant level by retrieving a part of the piston member (40, 70) form the inner volume (10) to compensate for the increase in pressure due to the reduction of the volume of the molding cavity (42).

13. Method according to claim 12, wherein:
- the first pressure (P₁) is substantially comprised between 4 and 15 bar,
- and/or wherein the second pressure is substantially comprised between 20 and 80 bar, preferably between 25 and 45 bars, in particular about 40 bars,
- and/or wherein the pressure of the predetermined pressure profile is comprised between 4 to 20 bars.

14. Method according to any one of claims 1 to 13, wherein the position of the piston member (40, 70) inside the formed container just before the outlet (18) and the piston member (40) are retrieved from the formed container is such that the volume of the liquid inside of the closed volume is equal to a volume of liquid at or below a desired level of liquid inside the produced container.

15. Station for forming and filling with liquid a container (1) from a preform (2) having an inner volume (10), the station comprising:
- an injection device (4) including an outlet (18) in fluidic communication with a liquid source (22),
- an injection device actuator (41) arranged to connect the outlet (18) in tight fluidic communication with the preform (2),
- injection means (24) arranged to take liquid from the liquid source (22) and to inject said liquid in the inner volume (10) of the preform (2) through the outlet (18), **characterized in that**:
- a closable sealing barrier (57, 82) extending between the inner volume (10) and the liquid source (22), wherein closing the sealing barrier when the injection device actuator is actuated, forms a fluid tight closed volume (58) comprising at least the inner volume (10),
- a piston member (40, 70) placed in the fluid tight closed volume (58),
- a control unit adapted to successively drive the injection means (24), close the sealing barrier (57, 82) when the volume (58) to be formed is full of liquid and then drive the piston member (40, 70) so as to increase the liquid pressure in the closed volume (58),
wherein during the actuation of the piston member (40, 70), the piston member (40, 70) is at least in part inside the inner volume of the preform (2).

16. Station according to claim 15, wherein the injection device (4) further comprises:
- an inlet (16) in fluidic communication with said liquid source (22),
- a chamber (20) extending between the inlet (16) and the outlet (18),
- a hollow control rod (32) comprising a sealing ring (34) extending in the chamber (20), the piston member (40, 70) extending inside the hollow control rod (32),
- sealing means (43) provided between the piston member (40, 70) and the sealing ring (34) to prevent liquid from flowing between the piston member and the sealing ring (34),
and wherein the sealing barrier (57, 82) comprises the sealing ring (34), the sealing means (43) and the piston member (40, 70) such that the sealing barrier (57, 82) isolates the closed volume (58) from the rest of the chamber (20).

17. Station according to claim 16, further comprising injection means (24) adapted to inject liquid coming from the liquid source (22) through the inlet (16) to the chamber (20) and to inject liquid through the outlet (18) at a first pressure (P1).

18. Station according to any claim 15 to 17, wherein the piston member is formed by a stretch rod (40) adapted to longitudinally stretch the preform or by an element (70) distinct from the stretch rod (72), in which case, the station further comprises a stretch rod actuator (76) different from the piston member actuator (74),
and/or wherein the station comprises a mold (6) having a mold cavity (42) and a placing device adapted to place the preform (8) in the mold cavity (42),
and/or wherein the piston member (40,70) is adapted to increase the pressure liquid up to a pressure level adapted to provide expansion of the preform up to the shape of the mold cavity,
and/or wherein the piston member (40, 70) and the sealing barrier are arranged such that the piston member is able to move, inside the fluid tight closed volume (58) and all over the range of the liquid pressure generated by the piston member, without breaking the sealing barrier (57, 82).

19. Machine for forming and filling with liquid a plurality of containers (1), comprising a plurality of stations according to any one of claims 15 to 18 distributed along a closed loop carousel, the machine comprising at least one pump (24) for providing a liquid at a predetermined pressure (P1), said pump being in fluidic communication with each injection device of said stations.

## Patentansprüche

1. Verfahren zum Herstellen eines mit einer Flüssigkeit gefüllten Behälters (1) aus einer Vorform (2) mit einem Innenvolumen (10), wobei das Verfahren eine Spritzvorrichtung (4) verwendet, die einen Auslass (18) umfasst und mit einer Flüssigkeitsquelle (22) verbunden ist, wobei das Verfahren die folgenden Schritte umfasst:
- Platzieren des Auslasses (18) in eine dichte strömungstechnische Verbindung mit der Vorform (2),
- Einspritzen der Flüssigkeit aus der Quelle (22) durch den Auslass (18) hindurch in das Innenvolumen (10) der Vorform (2),
**dadurch gekennzeichnet, dass**:
- eine Abdichtungssperre (57, 82) zwischen dem Innenvolumen (10) und der Flüssigkeitsquelle (22) geschlossen wird, wobei die geschlossene Abdichtungssperre ein fluiddichtes geschlossenes Volumen (58) bildet, das geschlossene Volumen mindestens das Innenvolumen (10) einschließt und das Verschließen der Abdichtungssperre stattfindet, sobald das geschlossene Volumen (58) mit Flüssigkeit gefüllt ist,
- ein Kolbenelement (40, 70) in das Volumen eingesetzt wird,
- das Kolbenelement (40, 70) betätigt wird, wenn die Abdichtungssperre geschlossen ist, sodass der Flüssigkeitsdruck in dem geschlossenen Volumen (58) steigt,
wobei während des Betätigens des Kolbenelementes (40, 70) das Kolbenelement (40, 70) mindestens teilweise in das Innenvolumen (10) der Vorform (2) eintritt.

2. Verfahren nach Anspruch 1, bei dem die Spritzvorrichtung (4) außerdem umfasst:
- einen Einlass (16) in strömungstechnischer Verbindung mit der Flüssigkeitsquelle (22),
- eine Kammer (20), die sich zwischen dem Einlass (16) und dem Auslass (18) erstreckt,
- eine hohle Steuerstange (32), die einen Dichtring (34) aufweist, der sich in die Kammer (20) erstreckt, wobei das Kolbenelement (40, 70) sich innerhalb der hohlen Steuerstange (32) erstreckt,
- Dichtungsmittel (43), die zwischen dem Kolbenelement (40, 70) und dem Dichtring (34) vorgesehen ist, um eine Fließen der Flüssigkeit zwischen dem Kolbenelement und dem Dichtring (34) zu vermeiden,
und wobei das Verschließen der Abdichtungssperre (57, 82) durch Bewegen der hohlen Steuerstange (32) von einer Einspritzposition, bei der der Auslass (18) über die Kammer (20) in einer strömungstechnischen Verbindung mit dem Einlass (16) ist, in eine Abdichtungsposition, bei der der Dichtring (34) die Kammer (20) verschließt, derart dass die Abdichtungssperre (57, 82) das geschlossene Volumen (58) von dem Rest der Kammer (20) isoliert.

3. Verfahren nach Anspruch 1 oder 2, bei dem das Kolbenelement ein Reckdorn (40) ist, der sich innerhalb des Innenvolumens (10) der Vorform (2) bewegt, um eine Verformung der Vorform (2) zu bewirken.

4. Verfahren nach Anspruch 3, bei dem während des Einspritzens der Flüssigkeit das Verfahren die Schritte umfasst:
- Bewegen des Reckdorns (40) in Längsrichtung entlang einer Achse A, die eine axiale Richtung zu einem Boden der Vorform definiert,
- Schieben des Reckdorns, um axial die Vorform zu verformen, und
- Zurückholen mindestens eines Teils des Reckdorns (40) aus dem Innenvolumen (10) vor dem Verschließen der Abdichtungssperre (57, 82).

5. Verfahren nach einem der Ansprüche 1 bis 4, bei dem das Verfahren außerdem das Einsetzen der Vorform (2) in eine Form (6) umfasst, wobei die Form (6) einen Formenhohlraum (42) bildet, der die Form des zu erzeugenden Behälters (1) aufweist, wobei die in der Form platzierten Vorform aus thermoplastischem Material hergestellt ist und auf eine Temperatur, die größer ist als die Glasübergangstemperatur des Materials der Vorform vor der Flüssigkeitseinspritzung in die Vorform aufgeheizt wird,
und/oder bei dem das Einspritzen der Flüssigkeit ein primärer Verformungsschritt ist, wobei die Flüssigkeit bei einem ersten Druck (P₁) eingespritzt wird, der vorgesehen ist, eine Verformung der Vorform (2) zu der Wand des Formenhohlraums (42) hin zu bewirken, und das Verschließen der Abdichtungssperre stattfindet, wenn die verformte Vorform (2) eine Zwischenform (56) erreicht hat.

6. Verfahren nach Anspruch 5, bei dem der erste Druck (P₁) auf die Flüssigkeit durch Einspritzmittel (24) aufgebracht wird, die geeignet sind, die Flüssigkeit von der Flüssigkeitsquelle (22) zu der Spritzvorrichtung (4) zu leiten, wobei die Abdichtungssperre (57, 82) sich zwischen den Einspritzmitteln (24) und dem Auslass (18) der Spritzvorrichtung (4) erstreckt.

7. Verfahren nach Anspruch 5 oder 6, bei dem die Betätigung des Kolbenelementes (40, 70) durch Erhöhen des Volumens des Kolbenelementes in dem geschlossenen Volumen (58) durchgeführt wird, wobei die anderen Teile, die das geschlossene Volumen (58) begrenzen, die Vorform selbst und in Bezug auf die Vorform feste fast starre Teile sind.

8. Verfahren nach einem der Ansprüche 5 bis 7, bei dem die Betätigung des Kolbenelementes (40, 70) einen zweiten Druck (P₂) in dem Innenvolumen (10) aufbringt, wobei der Druck ausgebildet ist, die Vorform (2) von ihrer Zwischenform (56) in die Form des Formenhohlraums (42) zu verformen, derart dass eine gefüllter und geformter Behälter erhalten wird.

9. Verfahren nach einem der Ansprüche 5 bis 8, bei dem der erste Druck (P₁) so lange aufgebracht wird, bis die Zwischenform (56) ein zwischen 95 % und 98 % des Volumens des zu erzeugenden Behälters (1) entsprechendes Volumen aufweist, und der zweite Druck (P₂) derart aufgebracht wird, dass das Volumen der Zwischenform (56) weiter um 2 % bis 5 % steigt, um den geformten Behälter (1) zu erhalten.

10. Verfahren nach einem der Ansprüche 5 bis 9, einen Halteschritt umfassend, bei dem die verformte Vorformgestalt in der Form des Formenhohlraums (42) gehalten wird, wobei eine auf das Kolbenelement (40, 70) aufgebrachte Kraft derart gesteuert wird, dass der auf die Flüssigkeit in dem geschlossenen Volumen aufgebrachte Druck einem vorbestimmten Druckprofil (P3) folgt.

11. Verfahren nach einem der Ansprüche 5 bis 10, bei dem der zweite Druck (P₂) sowohl durch Bewegen des Kolbenelementes (40, 70) in dem geschlossenen und gefüllten Volumen (10) der verformten Vorform (2) als auch durch Verringern des Volumens in dem Formenhohlraum (42) aufgebracht wird.

12. Verfahren nach Anspruch 11, bei dem die Form (6) mindestens ein Hauptteil und ein Bodenteil (52) umfasst, wobei die Teile zusammen den Formenhohlraum (42) begrenzen und das Verringern des Volumens des Formenhohlraum (42) durch Bewegen des Bodenteils (52) relativ zu dem Hauptteil der Form (6) erhalten wird,
und/oder wobei das Verfahren einen Schritt des Formens mindestens eines Teils des Behälters durch weiteres Verringern des Volumens des Formenhohlraums (42) umfasst, wobei der auf die verformte Vorform (2) während dieses Schritts aufgebrachte Druck auf einem konstanten Pegel durch Zurückholen eines Teils des Kolbenelementes (40, 70) aus dem Innenvolumen (10) gehalten wird, um den Druckanstieg aufgrund der Verringerung des Volumens des Formenhohlraums (42) zu kompensieren.

13. Verfahren nach Anspruch 12, bei dem:
- der erste Druck (P₁) im Wesentlichen zwischen 4 und 15 bar liegt,
- und/oder bei dem der zweite Druck im Wesentlichen zwischen 20 und 80 bar, vorzugsweise zwischen 25 und 45 bar, insbesondere bei ungefähr 40 bar liegt,
- und/oder bei dem der Druck des vorgegebenen Druckprofils zwischen 4 und 20 bar liegt.

14. Verfahren nach einem der Ansprüche 1 bis 13, bei dem die Position des Kolbenelementes (40, 70) in dem geformten Behälter unmittelbar vor dem Auslass (18) und des aus dem geformten Behälter zurückgezogenen Kolbenelementes (40) derart ist, dass das Volumen der Flüssigkeit in dem geschlossenen Volumen gleich einem Volumen der Flüssigkeit an oder unter einem gewünschten Pegel der Flüssigkeit in dem erzeugten Behälter ist.

15. Station zum Formen eines Behälters (1) aus einer Vorform (2) mit einem Innenvolumen (10) und Füllen desselben mit Flüssigkeit, wobei die Station umfasst:
- eine Spritzvorrichtung (4), die einen Auslass (18) in strömungstechnische Verbindung mit einer Flüssigkeitsquelle (22) einschließt,
- eine Stellvorrichtung (41) der Spritzvorrichtung, die angeordnet ist, den Auslass (18) in eine dichte strömungstechnische Verbindung mit der Vorform (2) zu verbinden,
- Einspritzmittel (24), die angeordnet sind, Flüssigkeit von der Flüssigkeitsquelle (22) aufzunehmen und diese Flüssigkeit über den Auslass (18) in das Innenvolumen (10) der Vorform (2) einzuspritzen, **dadurch gekennzeichnet, dass**:
- eine verschließbare Abdichtungssperre (57, 82) sich zwischen dem Innenvolumen (10) und der Flüssigkeitsquelle (22) erstreckt, wobei ein Verschließen der Abdichtungssperre, wenn die Stellvorrichtung der Spritzvorrichtung betätigt wird, eine fluiddichtes geschlossenes Volumen (58) bildet, das mindestens das Innenvolumen (10) umfasst,
- ein Kolbenelement (40, 70), das in dem fluiddichten geschlossenen Volumen (58) angeordnet ist,
- eine Steuereinheit, die angepasst ist, aufeinanderfolgend die Einspritzmittel (24) anzusteuern, die Abdichtungssperre (57, 82) zu verschließen, wenn das zu bildende Volumen (58) mit Flüssigkeit gefüllt ist und dann das Kolbenelement (40, 70) so anzutreiben, dass der Flüssigkeitsdruck in dem geschlossenen Volumen (58) erhöht wird,
wobei während der Betätigung des Kolbenelementes (40, 70) das Kolbenelementes (40, 70) mindestens teilweise in dem Innenvolumen der Vorform (2) ist.

16. Station nach Anspruch 15, bei der die Spritzvorrichtung (4) außerdem umfasst:
- einen Einlass (16) in strömungstechnischer Verbindung mit der Flüssigkeitsquelle (22),
- eine Kammer (20), die sich zwischen dem Einlass (16) und dem Auslass (18) erstreckt,
- eine hohle Steuerstange (32), die einen sich in die Kammer (20) erstreckenden Dichtring (34) aufweist, wobei das Kolbenelement (40, 70) sich in der hohlen Steuerstange (32) erstreckt,
- Dichtungsmittel (43), die zwischen dem Kolbenelement (40, 70) und dem Dichtring (34) vorgesehen sind, um zu verhindern, dass Flüssigkeit zwischen dem Kolbenelement und dem Dichtring (34) fließt, und wobei die Abdichtungssperre (57, 82) den Dichtring (34), die Dichtungsmittel (43) und das Kolbenelement (40, 70) umfasst, derart dass die Abdichtungssperre (57, 82) das geschlossene Volumen (58) von dem Rest der Kammer (20) isoliert.

17. Station nach Anspruch 16, außerdem Einspritzmittel (24) umfassend, die angepasst sind, von der Flüssigkeitsquelle (22) kommende Flüssigkeit durch den Einlass (16) in die Kammer (20) einzuspritzen und Flüssigkeit über den Auslass (18) bei einem ersten Druck (P₁) einzuspritzen.

18. Station nach einem der Ansprüche 15 bis 17, bei der das Kolbenelement von einem Reckdorn (40), der angepasst ist, in Längsrichtung die Vorform zu recken, oder von einem Element (72) getrennt von dem Reckdorn gebildet wird, in welchem Fall die Station außerdem eine Stellvorrichtung (76) des Reckdorns unterschiedlich zu der Stellvorrichtung (74) des Kolbenelementes umfasst,
und/oder wobei die Station eine Form (6) mit einem Formenhohlraum (42) und eine Setzvorrichtung, die geeignet ist, die Vorform (8) in dem Formenhohlraum (42) anzuordnen,
und/oder bei der das Kolbenelement (40, 70) geeignet ist, die Druckflüssigkeit bis zu einem Druckpegel zu erhöhen, der geeignet ist, eine Ausdehnung der Vorform bis zu der Form des Formenhohlraums vorzusehen,
und/oder bei der das Kolbenelement (40, 70) und die Abdichtungssperre so angeordnet sind, dass das Kolbenelement in der Lage ist, sich in dem fluiddichten geschlossenen Volumen (58) und über den Bereich des Flüssigkeitsdrucks, der von dem Kolbenelement erzeugt wird, zu bewegen, ohne die Abdichtungssperre (57, 82) zu durchbrechen.

19. Maschine zum Formen einer Mehrzahl von Behältern (1) und zum Füllen derselben mit Flüssigkeit, die eine Mehrzahl von Stationen entsprechend einem der Ansprüche 15 bis 18 umfasst, die entlang eines umlaufenden Karussellförderers verteilt ist, wobei die Maschine mindestens eine Pumpe (24) zum Liefern einer Flüssigkeit bei einem vorbestimmten Druck (P₁) umfasst, wobei diese Pumpe in strömungstechnischer Verbindung mit jeder Spritzvorrichtung der Stationen ist.

## Revendications

1. Procédé de fabrication d'un conteneur (1) rempli avec un liquide à partir d'une préforme (2) ayant un volume interne (10), le procédé utilisant un dispositif d'injection (4) qui comprend une évacuation (18) et relié à une source (22) du liquide, le procédé comprenant les étapes suivantes :
- le placement de l'évacuation (18) en communication de fluide étanche avec la préforme (2),
- l'injection du liquide depuis la source (22) dans le volume interne (10) de la préforme (2) par le biais de l'évacuation (18),
**caractérisé par** :
- la fermeture d'une barrière d'étanchéité (57, 82) entre le volume interne (10) et la source de liquide (22), la barrière d'étanchéité fermée formant un volume fermé étanche au fluide (58), ledit volume fermé comprenant au moins le volume interne (10), ladite fermeture de la barrière d'étanchéité ayant lieu une fois que le volume fermé (58) est rempli de liquide,
- le placement d'un élément de piston (40, 70) dans ledit volume fermé,
- l'entraînement dudit élément de piston (40, 70) lorsque la barrière d'étanchéité est fermée de sorte que la pression de liquide dans le volume fermé (58) augmente,
dans lequel, pendant le déclenchement de l'élément de piston (40, 70), l'élément de piston (40, 70) pénètre au moins en partie dans le volume interne (10) de la préforme (2).

2. Procédé selon la revendication 1, dans lequel le dispositif d'injection (4) comprend en outre :
- une admission (16) en communication de fluide avec ladite source de liquide (22),
- une chambre (20) qui s'étend entre l'admission (16) et l'évacuation (18),
- une tige de commande creuse (32) qui comprend une bague d'étanchéité (34) qui s'étend dans la chambre (20), l'élément de piston (40, 70) s'étendant à l'intérieur de la tige de commande creuse (32),
- un moyen d'étanchéité (43) prévu entre l'élément de piston (40, 70) et la bague d'étanchéité (34) afin d'empêcher le liquide de circuler entre l'élément de piston et la bague d'étanchéité (34),
et dans lequel ladite fermeture de la barrière d'étanchéité (57, 82) est effectuée en déplaçant la tige de commande creuse (32) entre une position d'injection, dans laquelle l'évacuation (18) est en communication de fluide avec l'admission (16) via la chambre (20), et une position d'étanchéité, dans laquelle la bague d'étanchéité (34) ferme la chambre (20) de sorte que la barrière d'étanchéité (57, 82) isole le volume fermé (58) du reste de la chambre (20).

3. Procédé selon la revendication 1 ou 2, dans lequel l'élément de piston est une tige d'allongement (40) déplacée à l'intérieur du volume interne (10) de la préforme (2) afin de provoquer une déformation de la préforme (2).

4. Procédé selon la revendication 3, dans lequel, pendant l'injection du liquide, le procédé comprend les étapes consistant à :
- déplacer la tige d'allongement (40) en translation le long d'un axe A, en définissant une direction axiale par rapport à un fond de la préforme,
- pousser la tige d'allongement afin de déformer axialement la préforme, et
- récupérer au moins une partie de la tige d'allongement (40) à partir du volume interne (10) avant la fermeture de la barrière d'étanchéité (57, 82).

5. Procédé selon l'une quelconque des revendications 1 à 4, dans lequel le procédé comprend en outre le placement de la préforme (2) dans un moule (6), ledit moule (6) formant une cavité de moule (42) ayant la forme du conteneur (1) à fabriquer, la préforme placée dans le moule étant composée d'un matériau thermoplastique et étant chauffée à une température supérieure à la température de transition vitreuse du matériau de la préforme avant l'injection de liquide dans la préforme,
et/ou dans lequel l'injection du liquide est une étape de déformation principale, ledit liquide étant injecté à une première pression (P₁) prévue pour provoquer une déformation de la préforme (2) vers la paroi de la cavité de moule (42), et la fermeture de la barrière d'étanchéité a lieu lorsque ladite préforme déformée (2) a acquis une forme intermédiaire (56).

6. Procédé selon la revendication 5, dans lequel la première pression (P₁) est appliquée au liquide par un moyen d'injection (24) adapté pour transférer le liquide de la source de liquide (22) vers le dispositif d'injection (4), la barrière d'étanchéité (57, 82) s'étendant entre ledit moyen d'injection (24) et l'évacuation (18) du dispositif d'injection (4).

7. Procédé selon la revendication 5 ou 6, dans lequel le déclenchement dudit élément de piston (40, 70) est effectué en augmentant le volume de l'élément de piston à l'intérieur du volume fermé (58), les autres parties délimitant ledit volume fermé (58) étant la préforme elle-même et les parties quasiment rigides fixées par rapport à la préforme.

8. Procédé selon l'une quelconque des revendications 5 à 7, dans lequel le déclenchement de l'élément de piston (40, 70) applique une seconde pression (P₂) à l'intérieur du volume interne (10), ladite pression étant prévue pour déformer davantage la préforme (2) de sa forme intermédiaire (56) jusqu'à la forme de la cavité de moulage (42) de sorte qu'un conteneur rempli et formé soit obtenu.

9. Procédé selon l'une quelconque des revendications 5 à 8, dans lequel la première pression (P₁) est appliquée jusqu'à ce que la forme intermédiaire (56) présente un volume correspondant à 95 % à 98 % du volume du conteneur (1) à fabriquer, la seconde pression (P₂) étant appliquée de sorte que le volume de la forme intermédiaire (56) augmente à nouveau de 2 % à 5 % afin d'obtenir le conteneur formé (1).

10. Procédé selon l'une quelconque des revendications 5 à 9, comprenant une étape de maintien au cours de laquelle la forme de préforme déformée est maintenue dans la forme de la cavité de moule (42), une force appliquée à l'élément de piston (40, 70) étant contrôlée de sorte que la pression appliquée au liquide dans le volume fermé suive un profil de pression prédéterminé (P3).

11. Procédé selon l'une quelconque des revendications 5 à 10, dans lequel la seconde pression (P₂) est appliquée en déplaçant l'élément de piston (40, 70) à l'intérieur du volume fermé et rempli (10) de la préforme déformée (2) et en réduisant le volume de la cavité de moulage (42).

12. Procédé selon la revendication 11, dans lequel le moule (6) comprend au moins une partie principale et une partie inférieure (52), lesdites parties définissant ensemble la cavité de moulage (42), la réduction du volume de la cavité de moulage (42) étant obtenue en déplaçant la partie inférieure (52) par rapport à la partie principale du moule (6),
et/ou dans lequel le procédé comprend une étape de mise en forme d'au moins une partie du conteneur en réduisant davantage le volume de la cavité de moulage (42), la pression appliquée à la préforme déformée (2) pendant cette étape étant maintenue à un niveau constant en récupérant une partie de l'élément de piston (40, 70) du volume interne (10) afin de compenser l'augmentation de pression due à la réduction du volume de la cavité de moulage (42).

13. Procédé selon la revendication 12, dans lequel :
- la première pression (P₁) est sensiblement comprise entre 4 et 15 bar,
- et/ou dans lequel la seconde pression est sensiblement comprise entre 20 et 80 bar, de préférence entre 25 et 45 bar, et est en particulier d'environ 40 bar,
- et/ou dans lequel la pression du profil de pression prédéterminé est comprise entre 4 et 20 bar.

14. Procédé selon l'une quelconque des revendications 1 à 13, dans lequel la position de l'élément de piston (40, 70) à l'intérieur du conteneur formé juste avant que l'évacuation (18) et l'élément de piston (40) ne soient récupérés du conteneur formé est telle que le volume du liquide à l'intérieur du volume fermé est égal à un volume de liquide égal ou inférieur à un niveau souhaité de liquide à l'intérieur du conteneur fabriqué.

15. Poste de mise en forme et de remplissage avec un liquide d'un conteneur (1) à partir d'une préforme (2) ayant un volume interne (10), le poste comprenant :
- un dispositif d'injection (4) comprenant une évacuation (18) en communication de fluide avec une source de liquide (22),
- un déclencheur de dispositif d'injection (41) prévu pour relier l'évacuation (18) en communication de fluide étanche avec la préforme (2),
- un moyen d'injection (24) prévu pour prendre le liquide de la source de liquide (22) et pour injecter ledit liquide dans le volume interne (10) de la préforme (2) par le biais de l'évacuation (18),
**caractérisé par** :
- une barrière d'étanchéité refermable (57, 82) qui s'étend entre le volume interne (10) et la source de liquide (22), dans lequel la fermeture de la barrière d'étanchéité lorsque le déclencheur de dispositif d'injection est déclenché forme un volume fermé étanche au fluide (58) comprenant au moins le volume interne (10),
- un élément de piston (40, 70) placé dans le volume fermé étanche au fluide (58),
- une unité de commande adaptée pour successivement entraîner le moyen d'injection (24), fermer la barrière d'étanchéité (57, 82) lorsque le volume (58) à former est rempli de liquide, puis entraîner l'élément de piston (40, 70) de façon à augmenter la pression de liquide dans le volume fermé (58),
dans lequel, pendant le déclenchement de l'élément de piston (40, 70), l'élément de piston (40, 70) est au moins en partie à l'intérieur du volume interne de la préforme (2).

16. Poste selon la revendication 15, dans lequel le dispositif d'injection (4) comprend en outre :
- une admission (16) en communication de fluide avec ladite source de liquide (22),
- une chambre (20) qui s'étend entre l'admission (16) et l'évacuation (18),
- une tige de commande creuse (32) comprenant une bague d'étanchéité (34) qui s'étend dans la chambre (20), l'élément de piston (40, 70) s'étendant à l'intérieur de la tige de commande creuse (32),
- un moyen d'étanchéité (43) prévu entre l'élément de piston (40, 70) et la bague d'étanchéité (34) afin d'empêcher le liquide de circuler entre l'élément de piston et la bague d'étanchéité (34),
et dans lequel la barrière d'étanchéité (57, 82) comprend la bague d'étanchéité (34), le moyen d'étanchéité (43) et l'élément de piston (40, 70) de sorte que la barrière d'étanchéité (57, 82) isole le volume fermé (58) du reste de la chambre (20).

17. Poste selon la revendication 16, comprenant en outre un moyen d'injection (24) adapté pour injecter du liquide qui provient de la source de liquide (22) par le biais de l'admission (16) dans la chambre (20), et pour injecter du liquide par le biais de l'évacuation (18) à une première pression (P₁).

18. Poste selon l'une quelconque des revendications 15 à 17, dans lequel l'élément de piston est formé par une tige d'allongement (40) adaptée pour allonger longitudinalement la préforme ou par un élément (70) distinct de la tige d'allongement (72), auquel cas le poste comprend en outre un déclencheur de tige d'allongement (76) différent du déclencheur d'élément de piston (74),
et/ou dans lequel le poste comprend un moule (6) ayant une cavité de moule (42) et un dispositif de placement adapté pour placer la préforme (8) dans la cavité de moule (42),
et/ou dans lequel l'élément de piston (40, 70) est adapté pour augmenter la pression du liquide jusqu'à un niveau de pression adapté pour assurer la dilatation de la préforme jusqu'à la forme de la cavité de moule,
et/ou dans lequel l'élément de piston (40, 70) et la barrière d'étanchéité sont prévus de sorte que l'élément de piston puisse se déplacer, à l'intérieur du volume fermé étanche au fluide (58) et sur l'ensemble de la plage de pression de liquide générée par l'élément de piston, sans briser la barrière d'étanchéité (57, 82).

19. Machine de mise en forme et de remplissage avec un liquide d'une pluralité de conteneurs (1), comprenant une pluralité de postes selon l'une quelconque des revendications 15 à 18 répartis le long d'un carrousel en boucle fermée, la machine comprenant au moins une pompe (24) destinée à fournir un liquide à une pression prédéterminée (P1), ladite pompe étant en communication de fluide avec chaque dispositif d'injection desdits postes.
